# EUROPÄISCHE PATENTSCHRIFT

(11) **EP 1 207 085 B1**
(45) Veröffentlichungstag und Bekanntmachung des Hinweises auf die Patenterteilung: **28.01.2004**
(21) Anmeldenummer: 01125981.9
(22) Anmeldetag: 31.10.2001
(51) Int. Cl.: B60R 19/02, B60R 19/24

(54) **Stossfänger**
Bumper
Pare-chocs

(30) Priorität: 17.11.2000 DE 10057311
(43) Veröffentlichungstag der Anmeldung: 22.05.2002
(73) Patentinhaber: Benteler Automobiltechnik GmbH, 33102 Paderborn (DE)
(72) Erfinder: Schröter, Martin, 33613 Bielefeld (DE); Arns, Wilhelm, Dr., 33102 Paderborn (DE)
(74) Vertreter: Ksoll, Peter, Dr.-Ing.

(56) Entgegenhaltungen:
- US-A- 4 022 451
- US-A- 4 889 374
- US-A- 5 785 367
- US-B1- 6 192 584
- PATENT ABSTRACTS OF JAPAN vol. 017, no. 565 (M-1495), 13. Oktober 1993 (1993-10-13) -& JP 05 162594 A (SUZUKI MOTOR CORP), 29. Juni 1993 (1993-06-29)

## Beschreibung

Die Erfindung betrifft einen Stoßfänger für ein Kraftfahrzeug gemäß den Merkmalen im Oberbegriff von Anspruch 1.

Stoßfänger sind quer an Front und Heck eines Kraftfahrzeugs zwischen der die Karosserie abschließenden Kunststoffverschalung und dem Rahmen des Kraftfahrzeugs angeordnet. Sie sollen dazu beitragen, dass die Fahrzeugstruktur bei einem Anprall mit geringer Geschwindigkeit keine Beschädigung davonträgt. Hierzu sind zwischen den Querträger und die Längsträger Pralldämpfer, sogenannte Crashboxen geschaltet. Die Pralldämpfer sollen die aus einem Anprall resultierende Energie absorbieren, indem diese in Verformungsarbeit umgewandelt wird.

Unterschiedlichste Stoßfänger bzw. Stoßfängeranordnungen sind bekannt. So zählt durch die DE 42 38 631 A1 eine Stoßfängeranordnung zum Stand der Technik mit einem Pralldämpfer aus einem Innenrohr und einem Außenrohr, die im Kollisionsfall ineinander geschoben werden. Das Innenrohr ist an den Schenkeln des Querträgers befestigt. Nachteilig an dieser Ausführungsform ist deren Gewicht und der aufwendige konstruktive Aufbau.

Im Umfang der US-A-3,599,757 werden unterschiedlichste Ausführungsformen von Pralldämpfern offenbart.

Ein in der Praxis bewährter Pralldämpfer besteht aus einer im Querschnitt rechteckigen Konstruktion, gebildet aus einer Oberschale und einer Unterschale. Diese sind U-förmig profiliert und miteinander gefügt. Die Bauart zeichnet sich durch eine hohe Quersteifigkeit aus. Das querträgerseitige Ende ist entweder am Steg des Querträgers oder an den Enden der seitlichen Schenkel festgelegt. Hier liegt eine potentielle Schwachstelle, weil es bei starker Verformung des Stoßfängers zu einem Abtrennen der Fügeverbindung zwischen Pralldämpfer und Querträger kommen kann.

Die US-A-5,785,367 zeigt einen Stoßfänger gemäß dem Oberbegriff des Anspruchs 1, wobei Querträger und Pralldämpfer z.B. durch Schweißen gefügt sind.

Hiervon ausgehend liegt der Erfindung die Aufgabe zugrunde, einen Stoßfänger zu schaffen mit einem in seinem Steifigkeitsverhalten verbesserten Querträger und erhöhter mechanischer Stabilität.

Die Lösung dieser Aufgabe besteht nach der Erfindung in einem Stoßfänger gemäß den Merkmalen von Anspruch 1.

Kernpunkt der Erfindung bildet die Maßnahme, dass die Pralldämpfer mit ihren querträgerseitigen Enden sowohl innen am Steg des Querträgers als auch im Bereich der Enden der Schenkel gefügt sind. Vorzugsweise erfolgt die Fügung schweißtechnisch.

Es hat sich gezeigt, dass diese Maßnahme zu einem wesentlich höheren Energieaufnahmevermögen des Stoßfängers führt, weil der Querträger durch die erfindungsgemäß vorgesehene Anbindung der Pralldämpfer deutlich versteift wird. Ferner wird eine größere Sicherheit gegen Trennen der Fügeverbindung bei extremen Verformungen durch die zusätzlichen Schweißnähte erreicht. Dies ist insbesondere bei Anprallvorgängen mit hohen Geschwindigkeiten vorteilhaft.

Die Fügung der Pralldämpfer und des Querträgers erfolgt sowohl durch eine im wesentlichen parallel zum Steg des Querträgers gerichtete Fügenaht als auch durch eine quer hierzu angeordnete Fügenaht endseitig der Schenkel. Diese in zumindest zwei Ebenen ausgerichtete Fügeverbindung gewährleistet eine hohe Steifigkeit und mechanische Stabilität.

In einer vorteilhaften Ausgestaltung des grundsätzlichen Erfindungsgedankens ist nach Anspruch 2 vorgesehen, dass sich endseitig an die Schenkel des Querträgers Flansche anschließen. Diese tragen zu einer Versteifung des Querträgers bei und können je nach Anforderungen nach innen oder nach außen des Querträgerprofils gerichtet sein, wobei im Anbindungsbereich der Pralldämpfer eine entsprechende konfigurativ abgestimmte Formgebung erfolgt.

Nach den Merkmalen des Anspruchs 3 weist das querträgerseitige Ende des Pralldämpfers seitliche und zu den Schenkeln beabstandete Laschen auf. Hierdurch kann Gewicht eingespart werden. Zudem ist die Fertigung rationell durchführbar.

Bei erhöhten Steifigkeits- und Stabilitätsanforderungen, insbesondere bei schweren Kraftfahrzeugen, kann der Stoßfänger gemäß Anspruch 4 ausgeführt werden. Danach ist vorgesehen, dass am querträgerseitigen Ende des Pralldämpfers seitliche Laschen ausgebildet sind, die auch mit den Schenkeln gefügt sind. Besonders zweckmäßig erscheint es hier, das querträgerseitige Ende des Pralldämpfesr rundum mit dem Querträger zu fügen. Grundsätzlich sind aber auch nur partielle Fügeabschnitte um die aneinanderstoßenden Querschnittsbereiche möglich.

Die Pralldämpfer sind gehäuseartige Hohlkörper (Crashboxen). Diese sind bevorzugt zweischalig aus Ober- und Unterschale gebildet, wie dies Anspruch 5 vorsieht. Die Oberschale und die Unterschale sind an den Längskanten ihrer Seitenschenkel gefügt. Zum Querträger hin sind die Pralldämpfer dann vorzugsweise offen. Längsträgerseitig besitzen sie in der Regel einen Anschlussflansch zur Anbindung an die Längsträger.

Die Erfindung ist nachfolgend anhand von in den Zeichnungen dargestellten Ausführungsbeispielen näher beschrieben. Es zeigen:
- Figur 1: technisch vereinfacht einen Vertikalschnitt durch eine erste Ausführungsform eines erfindungsgemäßen Stoßfängers;
- Figur 2: ebenfalls im vertikalen Querschnitt einen Ausschnitt aus einer zweiten Ausführungsform eines erfindungsgemäßen Stoßfängers und
- Figur 3: in perspektivischer Darstellungsweise einen Pralldämpfer.

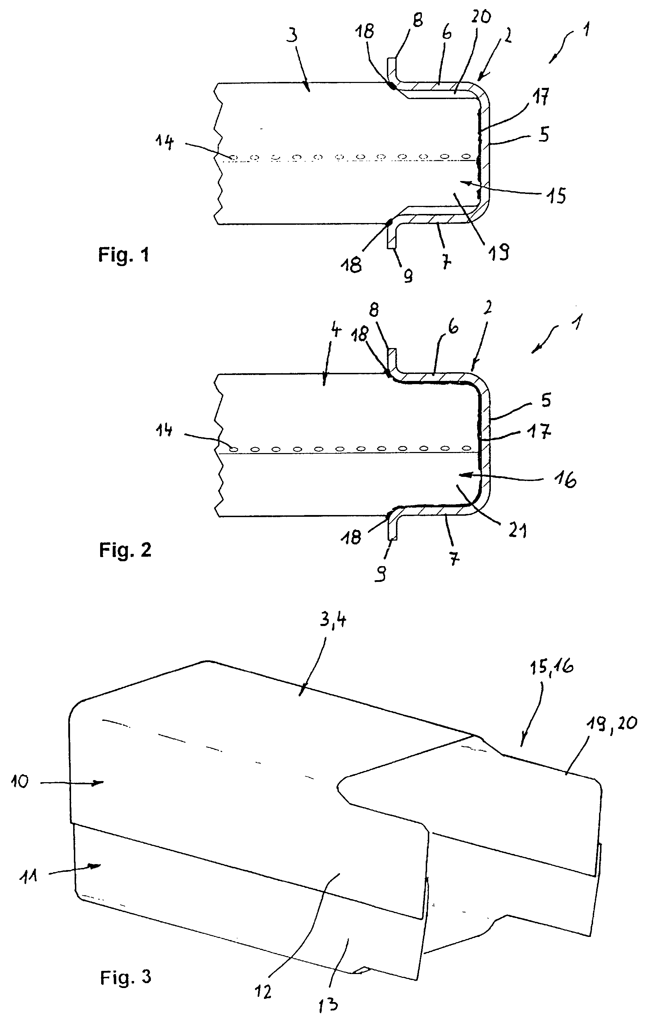

In den Figuren 1 und 2 ist jeweils mit 1 ein Stoßfänger bezeichnet für ein Kraftfahrzeug. Ein solcher Stoßfänger 1 umfasst einen quer zu den hier nicht dargestellten Längsträgern des Kraftfahrzeugrahmens festlegbaren Querträger 2. Zwischen den Längsträgern und den Querträgern 2 sind Pralldämpfer 3 bzw. 4 als Energie absorbierende Deformationselemente eingegliedert - solche Pralldämpfer 3 bzw. 4 werden fachsprachlich als Crashboxen bezeichnet.

Der Querträger 2 weist zumindest über den wesentlichen Teil seiner Länge ein zu den Pralldämpfern 3, 4 hin offenes Profil auf. Er besitzt als Schalenkonstruktion einen U-förmigen Querschnitt mit einem frontseitigen Steg 5, an den sich ein oberer Schenkel 6 und ein unterer Schenkel 7 anschließen.

Man erkennt in den Figuren 1 und 2 weiterhin, dass sich an die Schenkel 6, 7 Flansche 8, 9 anschließen, die in den hier dargestellten Ausführungsbeispielen nach außen gerichtet sind.

Wie auch die Figur 3 zeigt, sind die Pralldämpfer 3 bzw. 4 in Schalenbauweise jeweils aus zwei Halbschalen 10, 11 zusammengesetzt. Die Halbschalen 10, 11 sind konfigurativ aufeinander abgestimmt und überlappen sich endseitig ihrer Seitenschenkel 12, 13. Hier sind sie gefügt, beispielsweise wie in den Figuren 1 und 2 angedeutet durch eine Rollschweißnaht 14.

Jeder Pralldämpfer 3, 4 ist mit seinem querträgerseitigen Ende 15, 16 sowohl innenseitig des Querträgers 2 an den Steg 5 durch eine Schweißnaht 17 als auch endseitig an die Schenkel 6, 7 durch eine Schweißnaht 18 gefügt.

Am querträgerseitigen Ende 15 des Pralldämpfers 3 sind Laschen 19 ausgebildet, die zu den Schenkeln 6, 7 beabstandet sind. Zwischen den Schenkeln 6, 7 und den Laschen 19 ist folglich ein Hohlraum 20 vorhanden. Man erkennt in der Figur 1, dass die Pralldämpfer 3 mit dem Querträger 2 stirnseitig der Laschen 19 durch die Schweißnähte 17 sowie im Übergangsbereich der Schenkel 6, 7 zu den Flanschen 8, 9 durch die in Bildebene verlaufenden Schweißnähte 18 miteinander verbunden sind.

Der Pralldämpfer 4 hingegen weist, wie in der Figur 2 dargestellt, an seinem querträgerseitigen Ende 16 seitliche Laschen 21 auf, die auch mit den Schenkeln 6, 7 gefügt sind. Die Schweißnähte 17 erstrecken sich dann vom Steg 5 auch über die Schenkel 6,7. Grundsätzlich können die Schweißnähte 17 aber auch unterbrochen ausgeführt sein.

### Bezugszeichenaufstellung

- 1 -: Stoßfänger
- 2 -: Querträger
- 3 -: Pralldämpfer
- 4 -: Pralldämpfer
- 5 -: Steg
- 6 -: Schenkel
- 7 -: Schenkel
- 8 -: Flansch
- 9 -: Flansch
- 10 -: Halbschale
- 11 -: Halbschale
- 12 -: Seitenschenkel
- 13 -: Seitenschenkel
- 14 -: Rollschweißnaht
- 15-: Ende v. 3
- 16 -: Ende v. 4
- 17 -: Schweißnaht
- 18 -: Schweißnaht
- 19 -: Lasche
- 20 -: Hohlraum
- 21 -: Lasche

## Patentansprüche

1. Stoßfänger für ein Kraftfahrzeug mit einem unter Eingliederung von gehäuseartigen Pralldämpfern (3, 4) quer zu den Längsträgern des Kraftfahrzeugrahmens festlegbaren, im Querschnitt U-förmigen Querträger (2), welcher einen Steg (5) und zwei Schenkel (6, 7) aufweist, **dadurch gekennzeichnet, dass** jeder Pralldämpfer (3, 4) mit seinem querträgerseitigen Ende (15, 16) sowohl innen am Steg (5) des Querträgers (2), als auch im Bereich der Enden der Schenkel (6, 7) gefügt ist.

2. Stoßfänger nach Anspruch 1, **dadurch gekennzeichnet, dass** sich endseitig an die Schenkel (6, 7) Flansche (8, 9) anschließen.

3. Stoßfänger nach Anspruch 1 oder 2, **dadurch gekennzeichnet, dass** an dem querträgerseitigen Ende (15) des Pralldämpfers (3) seitliche und zu den Schenkeln (6, 7) beabstandete Laschen (19) ausgebildet sind.

4. Stoßfänger nach Anspruch 1 oder 2, **dadurch gekennzeichnet, dass** am querträgerseitigen Ende (16) des Pralldämpfers (4) seitliche Laschen (21) ausgebildet sind, die mit den Schenkeln (6, 7) gefügt sind.

5. Stoßfänger nach einem der Ansprüche 1 bis 4, **dadurch gekennzeichnet, dass** die Pralldämpfer (3, 4) zweischalig ausgebildet sind.

## Claims

1. A bumper for a motor vehicle, with a U-shaped cross-section cross-member (2) adapted to be fixed transversely of the longitudinal members of the motor vehicle frame, with the incorporation of housing-like impact dampers (3, 4), the said cross-member (2) having a web (5) and two limbs (6, 7), **characterised in that** each impact damper (3, 4) is joined by its end (15, 16) adjacent the cross-member both inside on the web (5) of the cross-member (2) and also in the region of the ends of the limbs (6, 7).

2. A bumper according to claim 1, **characterised in that** flanges (8, 9) adjoin the ends of the limbs (6, 7).

3. A bumper according to claim 1 or 2, **characterised in that** lateral plates (19) spaced from the limbs (6, 7) are formed on the end (15) of the bumper (3) adjacent the cross-member.

4. A bumper according to claim 1 or 2, **characterised in that** lateral plates (21) joined to the limbs (6, 7) are formed at the end (16) of the impact damper (4) adjacent the cross-member.

5. A bumper according to any one of claims 1 to 4, **characterised in that** the impact dampers (3, 4) are of two-shell construction.

## Revendications

1. Pare-chocs pour un véhicule automobile avec une traverse (2) incorporant des tampons amortisseurs en forme de caisson (3,4), traverse en forme de U en section transversale pouvant être fixée transversalement aux longerons du châssis du véhicule, et qui présente une âme (5) et deux ailes (6,7),
**caractérisé en ce que** chaque tampon amortisseur (3,4) est inséré par son extrémité côté traverse (15,16) aussi bien intérieurement sur l'âme (5) de la traverse (2) que dans la zone des extrémités des ailes (6,7).

2. Pare-chocs selon la revendication 1,
**caractérisé en ce que** sur le côté d'extrémité des ailes (6,7) viennent se raccorder des brides (8,9).

3. Pare-chocs selon la revendication 1 ou 2,
**caractérisé en ce que** sur l'extrémité côté traverse (15) du tampon amortisseur (3) sont formées des attaches (19) latérales et espacées des ailes (6,7).

4. Pare-chocs selon la revendication 1 ou 2,
**caractérisé en ce que** sur l'extrémité du côté traverse (16) du tampon amortisseur (4) sont formées des attaches latérales (21) qui sont fixées aux ailes (6,7).

5. Pare-chocs selon l'une des revendications 1 à 4,
**caractérisé en ce que** les tampons amortisseurs (3,4) sont constitués par deux coques.
